# EUROPÄISCHE PATENTSCHRIFT

(11) **EP 0 466 018 B1**
(45) Veröffentlichungstag und Bekanntmachung des Hinweises auf die Patenterteilung: **23.09.1998**
(21) Anmeldenummer: 91111077.3
(22) Anmeldetag: 04.07.1991
(51) Int. Cl.: F16K 31/06

(54) **Verfahren zur Montage eines Proportionalmagnetventils**
Method for assembling a proportional magnetic valve
Procédé pour le montage d'une soupape magnétique proportionnelle

(30) Priorität: 13.07.1990 DE 4022395
(43) Veröffentlichungstag der Anmeldung: 15.01.1992
(73) Patentinhaber: HYDRAULIK-RING GMBH, D-72622 Nürtingen (DE)
(72) Erfinder:
(74) Vertreter: Kohl, Karl-Heinz

(56) Entgegenhaltungen:
- EP-A- 295 132
- DE-B- 1 425 718
- GB-A- 2 180 627
- US-A- 3 876 177
- US-A- 4 116 389
- US-A- 4 834 337

## Beschreibung

Die Erfindung betrifft ein Verfahren zur Montage eines Proportionalmagnetventils nach dem Oberbegriff des Anspruches 1.

Bei solchen Magnetventilen wird Hydraulikmedium durch eine Druckleitung einer Arbeitsleitung zugeführt. Der sich hier aufbauende Druck ist davon abhängig, mit welcher Schließkraft die Achse des Magnetventils in einer Schließstellung gehalten wird, in der sie eine Tankrückleitung für das Hydraulikmedium abschließt. Überschreitet der Druck in der Arbeitsleitung die durch eine Druckfeder erzeugte Schließkraft, wird die Achse gegen diese Schließkraft zurückgeschoben, so daß das Hydraulikmedium in die Tankrückleitung gelangen kann. Um unterschiedliche Arbeitsdrücke einstellen zu können, wird die Spule bestromt, wodurch eine der auf die Achse wirkenden Schließkraft entgegengerichtete Magnetkraft entsteht. Dadurch wird die Achse schon bei geringeren Arbeitsdrücken zurückgeschoben. Bei der Fertigung solcher Magnetventile tritt das Problem auf, daß infolge von Toleranzen bei gleichen Stromwerten nicht gleiche Arbeitsdrücke eingestellt werden können. Aus diesem Grunde müssen die Einzelteile des Magnetventils bei der Fertigung in sehr engen Toleranzen hergestellt werden. Dies verteuert die Herstellung eines solchen Magnetventils.

Bei einem bekannten Proportionalmagnetventil (US-A-3 876 177) gemäß Oberbegriff des Anspruchs 1 kann der Anker relativ zum Polkern bzw. zur Spule eines Elektromagneten eingestellt werden. Der Anker weist eine stirnseitige Vertiefung auf, in der eine Ventilkugel untergebracht ist, die mittels einer Stellschraube in Achsrichtung des Ankers verstellt werden kann. Dadurch läßt sich der Abstand zwischen dem Ventilglied und dem Anker einstellen. Der Anker wird durch eine Druckfeder in Richtung auf das Ventil belastet, so daß die Ventilkugel am Ventilsitz anliegt. Wird der Elektromagnet erregt, wird der Anker gegen die Kraft der Druckfeder zurückgeschoben, so daß die axial fest mit ihm verbundene Ventilkugel vom Ventilsitz abhebt. Dieses Magnetventil ist so ausgebildet, daß durch Strombeaufschlagung des Elektromagneten der Anker sofort axial verschoben wird, wobei der Verschiebeweg des Ankers von der Stromstärke abhängt, mit welcher der Elektromagnet beaufschlagt wird. Auf diese Weise wird der Durchflußquerschnitt für das Hydraulikmedium eingestellt, das zwischen Ventilsitz und Ventilkugel hindurchströmen kann, da seine Weg-Kraft-Kennlinie innerhalb des gewählten Arbeitsbereiches sich im wesentlichen parallel zur Wegachse erstreckt. Da die einzelnen Teile des Magnetventiles Fertigungstoleranzen aufweisen, entstehen am Ende des Arbeitshubes bei unterschiedlich starken Magneten auch unterschiedliche Magnetkräfte.

Es ist ferner ein Schaltventil bekannt (US-A-4 834 337), das einen zwischen zwei Schaltstellungen hin- und herbewegbaren Kolben aufweist. In der einen Schaltstellung wird das Ventil geschlossen, während in der anderen Schaltstellung das Ventil geöffnet wird. Der Arbeitshub des Schaltventiles wird je nach Einsatz von Ventil zu Ventil unterschiedlich eingestellt. Dadurch soll nur so viel elektrische Schaltleistung aufgebracht werden, wie es der vorher festgelegte, zu schaltende Ölstrom erfordert. Die Einstellung erfolgt aufgrund einer Skala und von empirisch ermittelten Daten, die allerdings toleranzbehaftet sind, so daß bei einer Serienfertigung die unterschiedlichen Schaltventile auch unterschiedliche Eigenschaften haben.

Der Erfindung liegt die Aufgabe zugrunde, das gattungsgemäße Verfahren so auszubilden, daß das Proportionalmagnetventil bei kostengünstiger und einfacher Fertigung trotz Fertigungstoleranzen so eingestellt werden kann, daß einem bestimmten Stromwert ein bestimmter Arbeitsdruck entspricht.

Diese Aufgabe wird beim gattungsgemäßen Verfahren erfindungsgemäß mit den kennzeichnenden Merkmalen des Anspruches 1 gelöst.

Beim erfindungsgemäßen Verfahren werden Fertigungstoleranzen dadurch ausgeglichen, daß der Anker axial in bezug auf den Polkern so eingestellt wird, daß bei unterschiedlichen Magnetkraft-Hubweg-Kennlinien innerhalb eines eine Steigung aufweisenden Bereiches dieser Kennlinien am Ende des Arbeitshubes bei unterschiedlich starken Magneten jeweils gleiche Magnetkräfte entstehen. Dadurch ist es möglich, jedes Proportionalmagnetventil einer Serie so einzustellen, daß einem bestimmten Spulenstrom eine bestimmte Magnetkraft und damit ein bestimmter Arbeitsdruck des Proportionalmagnetventiles entspricht. Aufgrund dieser Einstellbarkeit müssen enge Fertigungstoleranzen nicht eingehalten werden, so daß das Proportionalmagnetventil kostengünstig hergestellt werden kann. Dadurch kann es hervorragend in einer Großserie eingesetzt werden. Auch ein Austausch des Proportionalmagnetventiles bei Verschleiß oder Beschädigung ist einfach möglich, weil das neue Proportionalmagnetventil ohne Schwierigkeiten genau eingestellt werden kann. Infolge der Verstellbarkeit des Ankers relativ zum Polkern ist sichergestellt, daß unabhängig von den jeweiligen Toleranzen der entsprechenden Bauteile des Proportionalmagnetventiles bestimmten Stromwerten auch bestimmte Kraftwerte zugeordnet werden können. Dadurch ist gewährleistet, daß bei jedem Proportionalmagnetventil bei einem vorgegebenen Stromwert dessen Kolben gleich weit verschoben wird.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: in einem axialen Halbschnitt ein Proportionalmagnetventil, das nach dem erfindungsgemäßen Verfahren hergestellt und als Proportionaldruckregelventil ausgebildet ist,
- Fig. 2: einen Teil eines Proportionalmagnetventiles, das als Schieberventil ausgebildet ist,
- Fig. 3: in einem Magnetkraft-Hubweg-Diagramm die Einstellung des Proportionalmagnetventils ohne Berücksichtigung des Einflusses einer den Anker belastenden Druckfeder und des Spulenstromes,
- Fig. 4: in einem Magnetkraft-Hubweg-Diagramm die Einstellung des Proportionalmagnetventils mit Berücksichtigung des Einflusses einer den Anker belastenden Feder und des Spulenstromes.

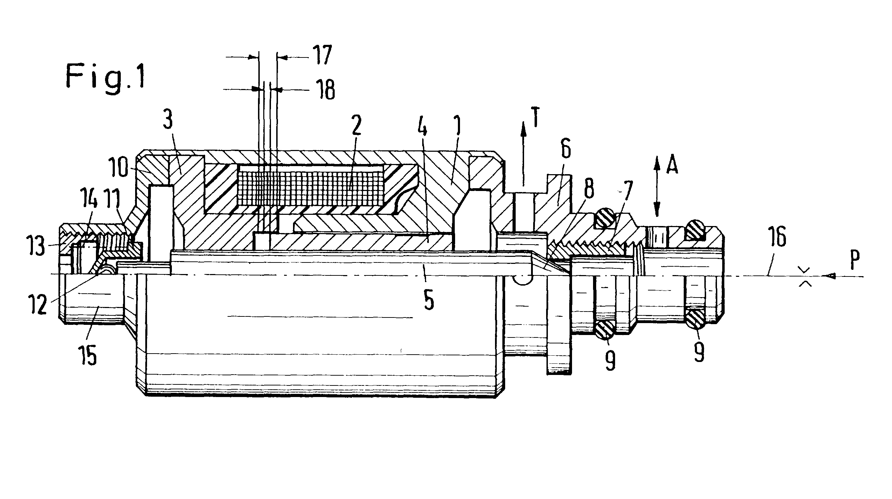

Das Magnetventil gemäß Fig. 1 hat ein Magnetgehäuse 1, das an einem Ende mit einem Ventilgehäuse 6 verbunden ist. Am anderen Ende ist in das Magnetgehäuse 1 ein Polkern 3 sowie ein Deckel 10 eingesetzt, mit dem das Magnetgehäuse 1 an diesem Ende geschlossen wird. Im Magnetgehäuse 1 ist eine Ringspule 2 untergebracht, die mit radialem Abstand einen Anker 4 umgibt. Er sitzt axial fest auf einer Achse 5, die zentrisch im Magnetgehäuse 1 angeordnet und durch Magnetkraft verstellbar ist. Die Achse 5 ragt mit einem Verschlußglied 8 in das Ventilgehäuse 6, in dem das Verschlußglied 8 in der einen Endstellung an einem Ventilsitz 7 anliegt.

Das gegenüberliegende Ende der Achse 5 ragt in den Deckel 10, der einen im Durchmesser verkleinerten Ringansatz 15 aufweist, in dem eine Druckfeder 14 untergebracht ist, die sich mit einem Ende an einer Stellschraube 13 und mit dem anderen Ende an einem Federteller 11 abstützt, der unter Zwischenlage einer Kugel 12 an dem dem Verschlußglied 8 gegenüberliegenden Ende der Achse 5 anliegt. Die Stellschraube 13 ist in den Ringansatz 15 geschraubt. Mit der Stellschraube 13 kann die Vorspannung der Druckfeder 14 stufenlos eingestellt werden.

In das Ventilgehäuse 6 mündet in Achsrichtung eine Druckleitung 16 für das unter dem Druck P stehende Hydraulikmedium. Das Ventilgehäuse 6 ist mit einem Arbeitsanschluß A und einem Tankanschluß T versehen. In der Einbaulage ist das Ventilgehäuse 6 in bekannter Weise durch zwei Dichtringe 9 gegenüber dem Einbauraum abgedichtet.

Bei ausgeschaltetem Magnetventil liegt die Achse 5 unter der Kraft der Druckfeder 14 mit dem Verschlußglied 8 dichtend am Ventilsitz 7 an. Das Verschlußglied 8 ist konisch ausgebildet und liegt mit der Kegelmantelfläche am Ventilsitz 7 an. Der Ventilsitz 7 ist als Gewindehülse ausgebildet, die in das Ventilgehäuse 6 geschraubt ist. Bei der Prüfung des Magnetventils kann der Ventilsitz in noch zu beschreibender Weise so eingestellt werden, daß eine vorgegebene Druck-Strom-Kennlinie erreicht wird.

Die Achse 5 liegt im Bereich zwischen dem Anker 4 und dem Deckel 10 gleitverschieblich im Polkern 3.

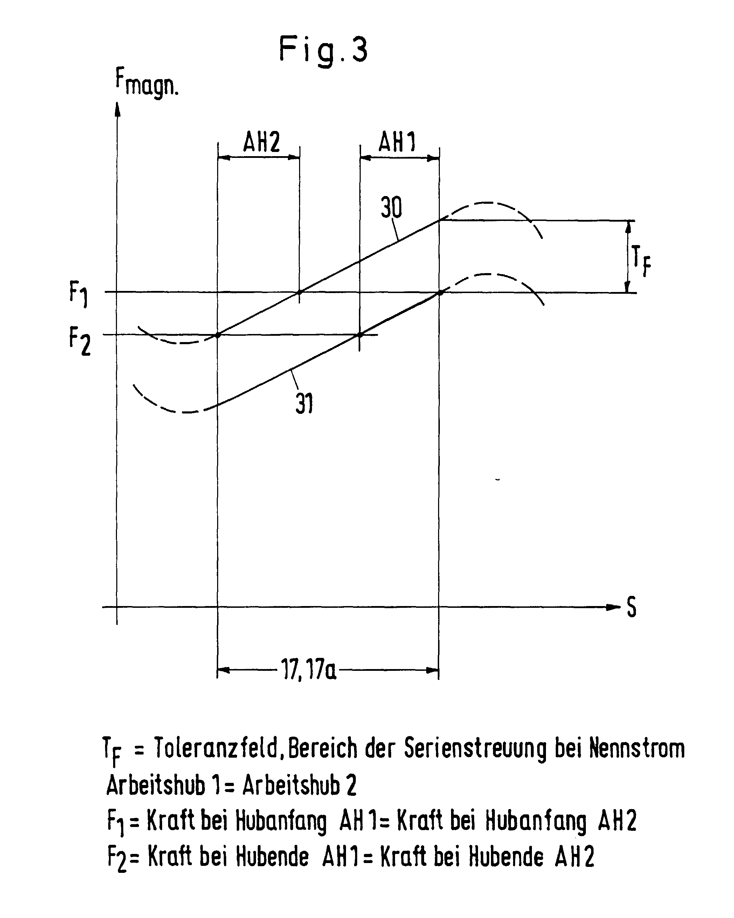

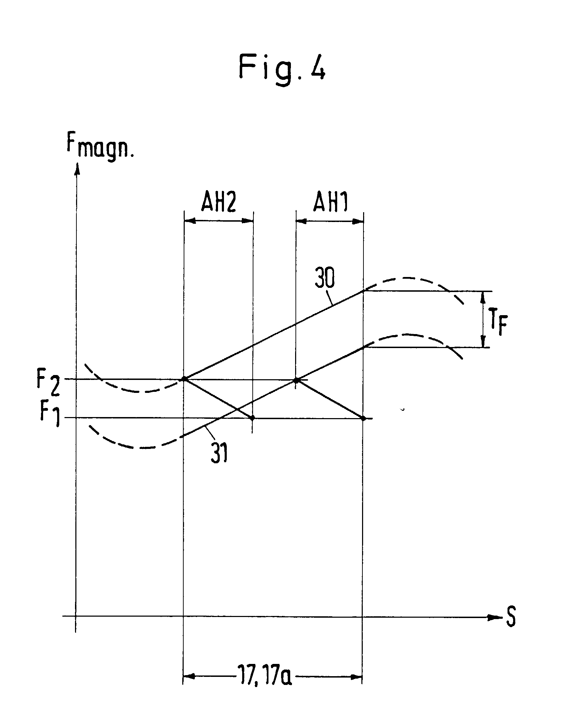

In der in Fig. 1 dargestellten stromlosen Stellung des Magnetventils hat der Anker 4 Abstand vom Polkern 3. Wird die Ringspule 2 bestromt, dann wirkt die entstehende Magnetkraft entgegen der Kraft der Druckfeder 14, verringert also deren Wirkung. Sobald der Arbeitsdruck im Arbeitsanschluß A größer ist als der verbleibende Druck der Feder 14, wird die Achse 5 zurückgeschoben, so daß das Verschlußglied 8 vom Ventilsitz 7 abhebt, so daß Hydraulikmedium in den Tankanschluß T gelangen kann. Somit kann durch die Höhe des Stromes ein bestimmter Arbeitsdruck eingestellt werden. Um eine genaue Druck-Strom-Zuordnung in einer Serienherstellung dieses Magnetventiles zu erreichen, besteht die Möglichkeit, Magnetkrafttoleranzen auszugleichen, so daß sichergestellt ist, daß bestimmten Stromwerten auch bestimmte Kraftwerte zugeordnet werden können, unabhängig von den jeweiligen Toleranzen. Dies wird durch Verstellen des Ventilsitzes 7 im Ventilgehäuse 6 ermöglicht, der hierfür als Schraubhülse ausgebildet ist. Sie kann innerhalb des Ventilgehäuses 6 stufenlos in die gewünschte Lage durch Drehen axial verstellt werden. Dabei wird die Achse 5 mit dem Anker 4 entsprechend axial im Magnetgehäuse 1 gegen die Kraft der Druckfeder 14 verschoben. Die Achse 5 mit dem Anker 4 wird im Bereich des Gesamthubes 17 so verstellt, daß der Arbeitshub 18 des Ankers 4 so innerhalb seines Gesamthubes 17 liegt, daß einem bestimmten Strom auch ein bestimmter Arbeitsdruck entspricht. Dies wird weiter unten anhand der Fig. 3 und 4 näher erläutert werden. Damit der Ventilsit 7 verstellt werden kann, ist er so ausgebildet, daß er vor dem Einbau des Magnetventils über die Druckleitung 16 mi einem geeigneten Schraubwerkzeug gedreht werden kann.

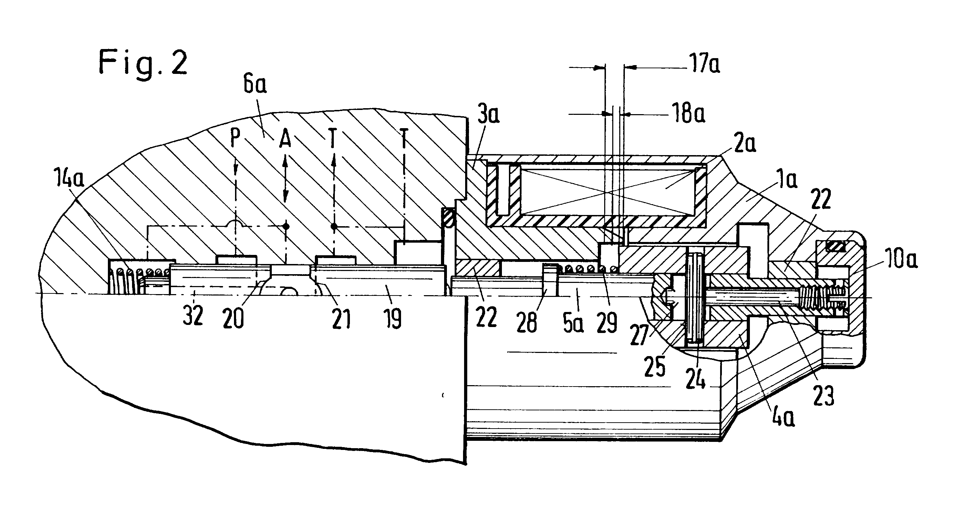

Das Magnetventil gemäß Fig. 2 ist als Schieberventil ausgebildet. Es hat ebenfalls das Magnetgehäuse la, in dem eine Ringspule 2a untergebracht ist. An das Magnetgehäuse la ist das Ventilgehäuse 6a angeschlossen, das in bekannter Weise den Druckanschluß P, den Arbeitsanschluß A und die Tankanschlüsse T aufweist.

Im Ventilgehäuse 6a ist ein Steuerschieber 19 verschiebbar gelagert, der zwei Steuerkanten 20 und 21 aufweist. An seinem vom Magnetgehäuse la abgewandten Ende greift die Druckfeder 14a an, die sich am Ventilgehäuse 6a abstützt. Am anderen Ende liegt der Steuerschieber 19 in bekannter Weise an der Achse 5a an, die im Magnetgehäuse la verschiebbar gelagert ist. Im Unterschied zum vorigen Ausführungsbeispiel ist die Achse 5a in wenigstens einem Lager 22 geführt, das vom Polkern 3a umgeben ist und an ihm anliegt. Auf der Achse 5a sitzt axial verschieblich der Anker 4a, der entsprechend dem vorigen Ausführungsbeispiel hülsenförmig ausgebildet ist. Im Unterschied zum vorigen Ausführungsbeispiel kann der Anker 4a jedoch axial auf der Achse 5a verschoben werden. Die Achse 5a ist an ihrem vom Ventilgehäuse 6a abgewandten Ende mit einer zentralen Bohrung versehen, in der ein Einstellteil 23 untergebracht ist. Es ist als Einstellschraube ausgebildet, an der ein Spannstift 24 anliegt, der senkrecht zum Einstellteil 23 liegt und in eine Diametralbohrung 25 des Ankers 4a ragt. Durch Drehen des Einstellteils 23 kann der Anker 4a axial auf der Achse 5a verschoben werden. Die Achse 5a ist für den Spannstift 24 mit einer Querbohrung 27 versehen, die axial so lang ist, daß der Anker 4a in gewünschtem Maße gegenüber der Achse 5a axial verstellt werden kann.

Im Magnetgehäuse 1a ist die Achse 5a mit einem weiteren Lager 22 abgestützt und geführt. Das vom Ventilgehäuse 6a abgewandte verjüngte Ende des Magnetgehäuses 1a ist durch den Deckel 10a geschlossen. Er ist auf seiner Innenseite mit einer Vertiefung versehen, in die das das Einstellteil 23 aufweisende Ende der Achse 5a in der einen Endstellung ragt.

Die Achse 5a weist im Bereich zwischen dem Steuerschieber 19 und dem Anker 4a einen Bund 28 auf, an dem sich das eine Ende einer Druckfeder 29 abstützt, die mit ihrem anderen Ende an der Stirnseite des Ankers 4a anliegt.

Die Fig. 2 zeigt das Magnetventil in der Ruhestellung bei nicht bestromter Spule 2a. Die Druckfeder 14a, deren Kraft kleiner ist als die jeweilige Magnetkraft, drückt den Steuerschieber 19 und die Achse 5a in Fig. 2 nach rechts bis zur Anlage am Deckel 10a. Der die Druckfeder 14a aufnehmende Raum steht über eine Verbindungsbohrung 32 im Steuerschieber 19 mit der Arbeitsleitung A in bekannter Weise in Verbindung.

Wird die Spule 2a bestromt, wird infolge der entstehenden Magnetkraft der Anker 4a mit der Achse 5a und damit der Steuerschieber 19 gegen die Kraft der Druckfeder 14a verschoben. Das Hydraulikmedium kann dann von der Druckleitung P in die Arbeitsleitung A gelangen und dort den Arbeitsdruck aufbauen. Die Kraft hält den Steuerschieber 19 so lange in dieser Stellung, bis die Druckkraft in der Arbeitsleitung A bzw. die auf die in Fig. 2 linke Stirnfläche des Steuerschiebers 19 wirkende, durch das Hydraulikmedium im Einbauraum der Druckfeder 14a und durch die Druckfeder 14a selbst erzeugte Kraft gleich groß wird wie die Magnetkraft. Steigt die Druckkraft, die aus dem Druck in der Arbeitsleitung A resultiert, noch an, wird der Steuerschieber 19 gegen die Magnetkraft in die sogenannte Überdeckungsstellung geschoben, in der sowohl die Verbindung zwischen der Druckleitung P und der Arbeitsleitung A als auch von der Arbeitsleitung A zum Tankrückfluß T geschlossen sind. Wird die Magnetkraft oder der Druck in der Arbeitsleitung A geändert, werden die Kraftverhältnisse am Steuerschieber 19 neu eingestellt.

Auch bei diesem Magnetventil können Magnetkrafttoleranzen, die in der Serienfertigung eines solchen Magnetventiles unvermeidlich sind, einfach ausgeglichen werden. Hierzu ist der Anker 4a mittels der Einstelleinrichtung 23, 24 auf der Achse 5a verschiebbar gelagert. Der Anker 4a wird durch die Druckfeder 29, deren Vorspannkraft größer ist als die maximale Magnetkraft, über den Spannstift 24 kraftschlüssig gegen den Einstellteil 23 gedrückt. Wird der Einstellteil 23 verdreht, verschiebt sich der Anker 4a auf der Achse 5a und somit unabhängig zu den Steuerkanten 20 und 21 des Steuerschiebers im Bereich des Gesamthubes 17a des Magneten. Der Arbeitshub 18a des Ankers 4a kann somit innerhalb des Gesamthubes 17a exakt so eingestellt werden, daß einem bestimmten Stromwert immer eine bestimmte Magnetkraft und somit ein bestimmter Druck in der Arbeitsleitung A zugeordnet werden kann, unabhängig davon, ob der Magnet hinsichtlich der Fertigungstoleranzen an der oberen oder unteren Toleranzgrenze liegt.

Bei beiden beschriebenen Ausführungsformen von Magnetventilen kann in einer Großserie die Druck-Strom-Kennlinie dieses Magnetventils mit einer Exemplarstreuung von nahezu 0 erreicht werden.

Anhand von Fig. 3 soll diese Einstellung der Magnetventile gemäß den Fig. 1 und 2 näher erläutert werden. In Fig. 3 ist die Magnetkraft F_{magn} gegen den Hubweg S aufgetragen. Bei dieser Darstellung ist der Einfluß der Druckfeder 14, 14a und des Spulenstromes nicht berücksichtigt. Die obere Kennlinie 30 gilt für einen starken Magneten und die untere Kennlinie 31 für einen schwächeren Magneten. Der Abstand dieser beiden Kennlinien voneinander ergibt das Toleranzfeld T_{F}, innerhalb dem die Kennlinien ein und desselben Magnetventiles bei einer Großserienfertigung variieren können. Die beiden Kennlinien 30 und 31 sind jeweils für den gleichen Strom aufgetragen worden. Der Gesamthub 17, 17a des Ankers 4, 4a wird so gelegt, daß die Magnetkraft-Hubweg-Kennlinie 30, 31 im Bereich dieses Gesamthubes linear verläuft. Das Toleranzfeld T_{F} gibt den Bereich der Serienstreuung bei einem bestimmten Nennstrom an. Obwohl infolge der Serienstreuung unterschiedliche Kennlinien 30 und 31 auftreten, können die beschriebenen Magnetventile so eingestellt werden, daß bei gleichem Arbeitshub 18, 18a gleiche Magnetkräfte auftreten. Bei starken Magneten mit der Kennlinie 30 wird beispielhaft der Arbeitshub AH2 innerhalb des Gesamthubes 17, 17a so gelegt, daß bei Hubanfang die Magnetkraft F₁ und bei Hubende die geringere Magnetkraft F₂ entsteht.

Tritt bei der Serienproduktion ein Magnetventil auf, das die tiefer liegende Kennlinie 31 aufweist, wird dessen Arbeitshub AH1 innerhalb des Gesamthubes 17, 17a so gelegt, daß am Hubanfang wiederum die gleiche Magnetkraft F₁ und am Hubende wiederum die tiefer liegende Magnetkraft F₂ entsteht. Der Hubbeginn wird innerhalb des Gesamthubes 17, 17a so gelegt, daß nach dem nötigen Arbeitshub AH1 bzw. AH2 das Kräftegleichgewicht zwischen Druck-, Feder- und Magnetkraft auch am Hubende zustandekommt.

Bei der Darstellung gemäß Fig. 4 ist der Einfluß der Druckfeder 14, 14a und des Spulenstromes berücksichtigt. Da die Druckfeder 14, 14a der Magnetkraft F_{magn} entgegenwirkt, ist die Magnetkraft F₁ am Hubanfang wegen dieser Einflußgrößen kleiner als die Magnetkraft F₂ am Hubende. Aus dieser Darstellung ergibt sich wiederum, daß trotz der Serienstreuung am Beginn und am Ende des Arbeitshubes AH1 und AH2 jeweils die gleiche Magnetkraft F₁ und F₂ auftritt.

Bei starken Magneten mit der Kennlinie 30 wird beispielhaft die Lage des Hubanfanges F₁ des Arbeitshubes AH2 innerhalb des Gesamthubes 17, 17a so gelegt, daß nach dem benötigten Hubweg AH2 ein Kräftegleichgewicht zwischen Druck-, Federund Magnetkraft am Hubende des Arbeitshubes AH2 zustandekommt. Gleiches gilt für schwache Magneten mit der Kennlinie 31.

Wie die Fig. 3 und 4 zeigen, weisen die beiden Magnetventile trotz der Serienstreuung am Beginn des Arbeitshubes AH1 und AH2 jeweils die gleiche Magnetkraft F₁ und am Ende des Arbeitshubes AH1 bzw. AH2 die Magnetkraft F₂ auf. Auf diese Weise lassen sich Toleranzen bei der Serienfertigung der Magnetventile sehr einfach ausgleichen, wobei jeweils sichergestellt ist, daß trotz der Serienstreuung bei einem vorgegebenen Nennstrom stets gleiche Magnetkräfte innerhalb des Arbeitshubes auftreten.

Beim Magnetventil gemäß Fig. 1 wird für die Einstellung der Ventilsitz 7, der als Schraubhülse ausgebildet ist, so innerhalb des Ventilgehäuses 7 axial verstellt, daß innerhalb des Gesamthubes 17 der Arbeitshub 18 so liegt, daß die gewünschten Magnetkräfte F_{magn} und damit bestimmte Drücke in der Arbeitsleitung A auftreten.

Beim Magnetventil gemäß Fig. 2 wird der Anker 4a mittels des Einstellteiles 23 in die gewünschte Lage relativ zur Achse 5a verstellt. Der Anker 4a wird damit unabhängig von den Steuerkanten 20, 21 des Steuerschiebers 19 im Bereich des Gesamthubes 17a des Magnetventiles verschoben. Somit läßt sich bei einer fallenden Magnetkraftkennlinie gemäß Fig. 3 zu einem Stromwert immer eine bestimmte Kraft und somit ein bestimmter Druck zuordnen, unabhängig davon, ob das Magnetventil an der oberen oder unteren Toleranzgrenze liegt.

## Patentansprüche

1. Verfahren zur Montage eines Proportionalmagnetventils, bei dem eine mit einem Anker (4, 4a) verbundene Achse (5, 5a) in eine Spule (2, 2a) gesteckt und die Lage des Ankers (4, 4a) relativ zu einem Polkern (3, 3a) mit wenigstens einem Einstellglied (7, 23) so eingestellt wird, daß der Arbeitshub (AH₁, AH₂) des Ventiles kleiner ist als dessen möglicher Gesamthub (10, 17a), wobei die Spule (2, 2a) bei Bestromung in Verbindung mit dem Anker (4, 4a) eine Magnetkraft erzeugt,
dadurch gekennzeichnet, daß der Anker (4, 4a) axial so in bezug auf den Polkern (3, 3a) eingestellt wird, daß bei unterschiedlichen Magnetkraft-Hubweg-Kennlinien (30, 31) innerhalb eines eine Steigung aufweisenden Bereiches dieser Kennlinien am Ende des Arbeitshubes (AH₁, AH₂) bei unterschiedlich starken Magnetkräften jeweils gleiche Magnetkräfte (F₁, F₂) entstehen, die einer auf die Achse (5, 5a) wirkenden Schließkraft entgegengerichtet sind.

2. Verfahren nach Anspruch 1,
dadurch gekennzeichnet, daß der Gesamthub des Magneten, die Steilheit der Magnetkraft-Hubweg-Kennlinie (30, 31) und die zulässige Krafttoleranz so aufeinander abgestimmt werden, daß der benötigte Arbeitshub (18, 18a) von dem stärksten und dem schwächsten Magnetventil einer Serie innerhalb des Gesamthubes (17, 17a) durch Verstellen des Ankers (4, 4a) so realisiert werden kann, daß die Kräfte bei Hubende des Arbeitshubes (18, 18a) jeweils die gleichen sind.

3. Verfahren nach Anspruch 1 oder 2,
dadurch gekennzeichnet, daß der Anker (4) zusammen mit der Achse (5) axial verstellt wird.

4. Verfahren nach einem der Ansprüche 1 bis 3,
dadurch gekennzeichnet, daß das Einstellglied (7) mit der Achse (5) zusammenwirkt.

5. Verfahren nach einem der Ansprüche 1 bis 4,
dadurch gekennzeichnet, daß das Einstellglied (7) eine Gewindehülse ist, an deren Stirnseite die Achse (5) anliegt.

6. Verfahren nach einem der Ansprüche 1 bis 5,
dadurch gekennzeichnet, daß das Einstellglied (7) einen Ventilsitz aufweist, an den die Achse (5) mit einem Verschlußglied (8), vorzugsweise unter Federkraft, dichtend angelegt ist.

7. Verfahren nach einem der Ansprüche 1 bis 6,
dadurch gekennzeichnet, daß das Einstellglied (7) in ein Ventilgehäuse (6) geschraubt wird.

8. Verfahren nach Anspruch 6 oder 7,
dadurch gekennzeichnet, daß das Verschlußglied (8) konisch ausgebildet ist.

9. Verfahren nach Anspruch 1 oder 2,
dadurch gekennzeichnet, daß der Anker (4a) relativ zur Achse (5a) axial verstellt wird.

10. Verfahren nach Anspruch 9,
dadurch gekennzeichnet, daß die Achse (5a) ein Betätigungsglied für einen Steuerschieber (19) bildet.

11. Verfahren nach Anspruch 9 oder 10,
dadurch gekennzeichnet, daß der Anker (4a) unter der Kraft mindestens einer Feder (29) an das Einstellglied (23) angelegt wird.

12. Verfahren nach Anspruch 11,
dadurch gekennzeichnet, daß die Federkraft der Feder (29) größer ist als die maximale Magnetkraft (F_{magn}).

13. Verfahren nach Anspruch 11 oder 12,
dadurch gekennzeichnet, daß die Achse (5a) ein Widerlager (28), vorzugsweise einen Bund, aufweist, an dem die Druckfeder (29) abgestützt wird, die den Anker (4a) gegen das Einstellglied (23) drückt.

14. Verfahren nach einem der Ansprüche 9 bis 13,
dadurch gekennzeichnet, daß das Einstellglied (23) eine axial in die Achse (5a) geschraubte Stellschraube ist.

15. Verfahren nach einem der Ansprüche 9 bis 14,
dadurch gekennzeichnet, daß in den Anker (4a) ein ihn quer durchsetzender Anschlagteil (24) gesteckt wird, der unter der Kraft der am Anker (4a) angreifenden Druckfeder (29) am freien Ende des Einstellgliedes (23) anliegt.

16. Verfahren nach Anspruch 15,
dadurch gekennzeichnet, daß der Anschlagteil (24) durch eine Querbohrung (27) der Achse (5a) gesteckt wird.

17. Verfahren nach Anspruch 16,
dadurch gekennzeichnet, daß die axiale Länge der Querbohrung (27) der Achse (5a) wenigstens gleich groß ist wie der maximale Verstellweg des Ankers (4a).

## Claims

1. A method for mounting a solenoid valve in which an axle (5, 5a) connected with an armature (4, 4a) is inserted in a coil (2, 2a) and the position of the armature (4, 4a) in relation to a pole core (3, 3a) is adjusted with at least one adjusting member (7, 23) in such a way that the working stroke (AH₁, AH₂) of the valve is smaller than its potential total stroke (10, 17a), so that the coil (2, 2a), when electrified, generates a magnetic force in conjunction with the armature (4, 4a), characterised in that the armature (4, 4a) is positioned axially in relation to the pole cores (3, 3a) in such a way that at varying magnetic-force stroke-path-characteristic curves (30, 31) within a region of these characteristic curves exhibiting an incline, at the end of the working stroke (AH₁, AH₂) with varying strengths of magnetic forces, the same magnetic forces (F₁, F₂) are produced each time which are directed against a closing force acting on the axle (5, 5a).

2. A method according to claim 1,
characterised in that the total stroke of the magnet, the steepness of the magnetic-force stroke-path characteristic curve (30, 31) and the permissible force tolerance are modulated in such a way that the required working stroke (18, 18a) can be realised from the strongest and the weakest solenoid valve of a series within the total stroke (17, 17a) by adjusting the armature (4, 4a), in such a way that the forces at the stroke end of the working stroke (18, 18a) are the same in each case.

3. A method according to claim 1 or 2,
characterised in that the armature (4) is axially adjusted together with the axle (5).

4. A method according to any one of claims 1 to 3,
characterised in that the adjusting member (7) co-operates with the axle (5).

5. A method according to any one of claims 1 to 4,
characterised in that the adjusting member (7) is a threaded sleeve, the axle (5) contacting with the front end thereof.

6. A method according to any one of claims 1 to 5,
characterised in that the adjusting member (7) has a valve seat with which the axle (5) contacts with a closure member (8) preferably under spring tension, so as to be sealed.

7. A method according to any one of claims 1 to 6,
characterised in that the adjusting member (7) is screwed into a valve housing (6).

8. A method according to claim 6 or 7,
characterised in that the closure member (8) is formed conically.

9. A method according to claim 1 or 2,
characterised in that the armature (4a) is axially adjusted in relation to the axle (5a).

10. A method according to claim 9,
characterised in that the axle (5a) forms an actuating member for a control slide (19).

11. A method according to claim 9 or 10,
characterised in that the armature (4a) contacts with the adjusting member (23) under the force of at least one spring (29).

12. A method according to claim 11,
characterised in that the spring tension of the spring (29) is greater than the maximum magnetic force (F_{magn}).

13. A method according to claim 11 or 12,
characterised in that the axle (5a) has an abutment (28), preferably a collar, on which the pressure spring (29) is supported, which pressure spring presses the armature (4a) against the adjusting member (23).

14. A method according to any one of claims 9 to 13,
characterised in that the adjusting member (23) is a regulating screw, screwed axially into the axle (5a).

15. A method according to any one of claims 9 to 14,
characterised in that a stopping part (24) is inserted in the armature (4a) so as to cross through it, which stopping part (24), under the force of the pressure spring (29) acting upon the armature (4a), contacts with the free end of the adjusting member (23).

16. A method according to claim 15,
characterised in that the stopping part (24) is inserted through a transverse bore (27) of the axle (5a).

17. A method according to claim 16,
characterised in that the axial length of the transverse bore (27) of the axle (5a) is at least of equal length to the maximum adjustment path of the armature (4a).

## Revendications

1. Procédé pour le montage d'une valve magnétique proportionnelle, dans lequel un axe (5, 5a) relié à une armature (4, 4a) est enfiché dans un bobinage (2, 2a), et la position de l'armature (4, 4a) par rapport à un noyau polaire (3, 3a) est réglée au moyen d'au moins un organe de réglage (7, 23) de telle manière que la course de travail (AH1, AH2) de la valve est plus petite que sa course totale possible (10, 17a), le bobinage (2, 2a) produisant en relation avec l'armature (4, 4a) une force magnétique lorsqu'il est alimenté en courant,
caractérisé en ce que l'armature (4, 4a) est réglée axialement par rapport au noyau polaire (3, 3a) de manière que, pour des courbes caractéristiques différentes entre la force magnétique et la course (30, 31) à l'intérieur d'une plage de ces courbes caractéristiques qui présente une croissance, il apparaisse à chaque fois les mêmes forces magnétiques (F₁, F₂) à la fin de la course de travail (AH1, AH2) avec des aimants de forces différentes, lesdites forces étant dirigées à l'encontre d'une force de fermeture qui agit sur l'axe (5, 5a).

2. Procédé selon la revendication 1,
caractérisé en ce que la course totale de l'aimant, la pente de la courbe caractéristique force magnétique/course (30, 31), et la tolérance admissible sur la force sont accordées les unes aux autres de telle manière que la course de travail nécessaire (18, 18a) de la valve magnétique la plus forte et celle de la valve magnétique la plus faible dans une série peuvent être réalisées à l'intérieur de la course totale (17, 17a) par réglage de l'armature (4, 4a) de telle façon que les forces soient respectivement les mêmes à la fin de la course de travail (18, 18a).

3. Procédé selon l'une ou l'autre des revendications 1 et 2, caractérisé en ce que l'armature (4) est réglée axialement ensemble avec l'axe (5).

4. Procédé selon l'une des revendications 1 à 3, caractérisé en ce que la pièce de réglage (7) coopère avec l'axe (5).

5. Procédé selon l'une des revendications 1 à 4, caractérisé en ce que la pièce de réglage (7) est une douille filetée, et en ce que l'axe (5) est en contact avec la face frontale de ladite douille.

6. Procédé selon l'une des revendications 1 à 5, caractérisée en ce que la pièce de réglage (7) présente un siège de valve contre lequel s'applique de façon étanche l'axe (5) par l'intermédiaire d'un organe d'obturation (8), de préférence sous la force d'un ressort.

7. Procédé selon l'une des revendications 1 à 6, caractérisé en ce que la pièce de réglage (7) est vissée dans un boîtier de valve (6).

8. Procédé selon l'une ou l'autre des revendications 6 et 7, caractérisé en ce que l'organe d'obturation (8) est réalisé sous forme conique.

9. Procédé selon l'une ou l'autre des revendications 1 et 2, caractérisé en ce que l'armature (4a) est déplacée axialement par rapport à l'axe (5a).

10. Procédé selon la revendication 9, caractérisé en ce que l'axe (5a) forme un organe d'actionnement pour un tiroir de commande (19).

11. Procédé selon l'une ou l'autre des revendications 9 et 10, caractérisé en ce que l'armature (4a) est appliquée contre la pièce de réglage (23) sous la force d'au moins un ressort (29).

12. Procédé selon la revendication 11, caractérisé en ce que la force du ressort (29) est supérieure à la force magnétique maximum (F_{magn}).

13. Procédé selon l'une ou l'autre des revendications 11 et 12, caractérisé en ce que l'axe (5a) comporte un appui (28), de préférence une collerette, contre laquelle s'appuie le ressort de compression (29), lequel repousse l'armature (4a) contre la pièce de réglage (23).

14. Procédé selon l'une des revendications 9 à 13, caractérisé en ce que la pièce de réglage (23) est une vis de réglage vissée axialement dans l'axe (5a).

15. Procédé selon l'une des revendications 9 à 14, caractérisé en ce qu'une pièce de butée (24) est enfichée dans l'armature (4a) et la traverse transversalement, ladite pièce de butée étant appliquée contre l'extrémité libre de la pièce de réglage (23) sous la force du ressort de compression (29) qui attaque l'armature (4a).

16. Procédé selon la revendication 15, caractérisé en ce que la pièce de butée (24) est enfichée à travers un perçage transversal (27) de l'axe (5a).

17. Procédé selon la revendication 16, caractérisé en ce que la longueur axiale du perçage transversal (27) de l'axe (5a) est au moins aussi grande que la course de réglage maximum de l'armature (4a).
